# EUROPÄISCHE PATENTSCHRIFT

(11) **EP 3 534 025 B1**
(45) Veröffentlichungstag und Bekanntmachung des Hinweises auf die Patenterteilung: **20.01.2021**
(21) Anmeldenummer: 19159589.1
(22) Anmeldetag: 27.02.2019
(51) Int. Cl.: F16C 33/60, F16C 33/76, F16C 19/38

(54) **LAGER**
BEARING
PALIER

(30) Priorität: 28.02.2018 DE 102018202993
(43) Veröffentlichungstag der Anmeldung: 04.09.2019
(73) Patentinhaber: Aktiebolaget SKF, 41 550 Göteborg (SE)
(72) Erfinder: Tanke, Jesko-Henning, 97422 Schweinfurt (DE); Kristandt, Holger, 97502 Euerbach (DE); Kogler, Christian, 8761 Oberkurzheim (AT)
(74) Vertreter: Kuhstrebe, Jochen

(56) Entgegenhaltungen:
- DE-A1- 4 222 852
- DE-A1- 19 935 014
- DE-A1-102014 208 232
- US-A- 5 118 206

## Beschreibung

Vorliegende Erfindung betrifft ein Lager mit einem ersten Ring, einem zweiten Ring sowie zwischen den Ringen angeordneten Wälzkörpern gemäß dem Oberbegriff von Patentanspruch 1, wobei der erste Ring ein geteilter Ring mit einem ersten und einem zweiten Ringteil ist.

Lager, die einen geteilten Ring aufweisen, benötigen zwischen den Teilen dieses Rings eine Dichtung, um das Austreten von Schmierstoff aus dem Lager und das Eintreten von Verunreinigungen in das Lager zu verhindern. Hierzu kann zwischen den Teilen des geteilten Rings eine Dichtung, beispielsweise ein O-Ring angeordnet sein. Allerdings kann sich aufgrund der Anordnung der Dichtung zwischen den Lagerringteilen der O-Ring verschieben, wodurch die Dichtwirkung nachlassen kann. Des Weiteren besteht bei besonders schmalen Lagern wenig Raum zwischen den Reihen, so dass die Anordnung eines solchen O-Rings kompliziert oder sogar unmöglich wird.

US 5 118 206 A offenbart die Merkmale des Oberbegriffs des Anspruchs 1.

Es ist deshalb Aufgabe vorliegender Erfindung, ein Lager bereitzustellen, in dem eine Abdichtung des Lagers auf verbesserte Weise möglich ist.

Diese Aufgabe wird durch ein Lager mit einem ersten Ring, einem zweiten Ring sowie zwischen den Ringen angeordneten Wälzkörpern gemäß Patentanspruch 1 gelöst.

Der erste Ring, der sowohl ein Innenring als auch ein Außenring sein kann, ist ein geteilter Ring mit einem ersten Ringteil und einem zweiten Ringteil, wobei eine ringförmige Dichtung in einem Stoßbereich zwischen dem ersten Ringteil und dem zweiten Ringteil angeordnet ist.

Um eine gute Abdichtung des Lagers zu gewährleisten, wird gemäß der vorliegenden Erfindung vorgeschlagen, dass der erste Ringteil und der zweite Ringteil des geteilten Rings eine sich axial erstreckende Aussparung aufweisen. Diese Aussparung wird durch einen sich axial erstreckenden Aussparungsteil in dem ersten Ringteil und einen sich axial erstreckenden Aussparungsteil in dem zweiten Ringteil gebildet.

Statt einem O-Ring, der zwischen dem ersten Ringteil und dem zweiten Ringteil angeordnet ist, wird die ringförmige Dichtung in der Aussparung angeordnet. Hierzu ist die Dichtung zylindermantelförmig ausgebildet und erstreckt sich axial in den Aussparungsteil des ersten Ringteils und den Aussparungsteil des zweiten Ringteils. Die Dichtung bildet somit einen flachen Ring, der in dem geteilten Ring angeordnet ist, statt nur zwischen den Teilen des Rings. Die Aussparung ist als Tasche in dem ersten und zweiten Ringteil ausgebildet, in der die zylindermantelförmige Dichtung aufgenommen ist.

Durch diese Anordnung kann im Vergleich zu bisherigen Dichtlösungen eine verbesserte Abdichtung erzielt werden.

Gemäß einer Ausführungsform weist die Dichtung in dem Stoßbereich eine sich nach radial innen und/oder nach radial außen auskragende Verdickung auf. Beispielsweise können die beiden Ringteile zusätzlich zu den Aussparungsteilen im Stoßbereich noch eine Ausfräsung aufweisen, in die sich die Verdickung der Dichtung erstrecken kann. Beispielsweise kann die Dichtung in einem radialen Randbereich des geteilten Rings angeordnet sein. Die Ausfräsung kann dabei in dem geteilten Ring zu den Wälzkörpern oder in der entgegengesetzten Richtung hin eine Öffnung darstellen. Durch die Verdickung der Dichtung wird diese Öffnung nach radial außen abgedichtet.

Die Dichtung kann an zumindest einem Ende ihrer axialen Ausdehnung mindestens eine sich radial nach innen und/oder nach außen erstreckende Dichtlippe aufweisen. Die radiale Erstreckung kann dabei auch eine schräge Erstreckung nach radial innen oder außen sein. Durch diese sich radial erstreckenden Dichtlippen kann eine radiale Abstützung der Dichtung im Bereich der Aussparungsteile erfolgen. Durch diese Abstützung kann zum einen die Dichtwirkung verbessert werden. Zum anderen wird durch die Dichtlippen eine Unempfindlichkeit gegenüber Toleranzen in den Aussparungen erreicht.

Durch die Dichtlippen kann in einer Ausführungsform zumindest ein Ende der axialen Ausdehnung der Dichtung pfeilförmig gestaltet sein. Durch ein solches pfeilförmiges Ende kann die Dichtung einfach in die Aussparungsteile eingeführt werden, da die Dichtlippen an dem Rand der Aussparungsteile entlanggleiten. Alternativ oder zusätzlich kann das axiale Ende selbst spitz ausgebildet sein, was ebenfalls eine leichtere Einführung ermöglicht.

Gemäß einer weiteren Ausführungsform weist zumindest ein Ende der axialen Ausdehnung der zylindermantelförmigen Dichtung eine Dichtstruktur mit mehreren auskragenden Elementen auf, die sich nach radial innen und/oder nach radial außen erstrecken. Die auskragenden Elemente können beispielsweise zahnförmig oder sägezahnförmig sein. Andere Formen der auskragenden Elemente sind ebenso möglich. Die Dichtstruktur kann an einem oder beiden axialen Enden angeordnet sein und kann sich sowohl nach radial innen als auch radial außen erstrecken. Durch die Dichtstruktur wird insbesondere eine Unempfindlichkeit gegenüber Toleranzen in den Aussparungsteilen erreicht.

Gemäß einer weiteren Ausführungsform kann der geteilte Ring im Stoßbereich zumindest eine Durchgangsöffhung aufweisen, welche sich aus zwei in den gegenüber liegenden Hälften des geteilten Ringes stirnseitig gelegenen Ausnehmungen mit radialem Verlauf durch den gesamten Ring hindurch zusammensetzt. Die Durchgangsöffnung kann einen ungefähr runden oder davon abweichenden, beispielsweise rechteckigen Querschnitt aufweisen. Diese Durchgangsöffhung kann beispielsweise als Zugang in das Lager zum Ein- und Ausbringen von Schmiermitteln verwendet werden, insbesondere von Fett. Eine zusätzliche Bohrung in einer der Ringhälften, außerhalb des Dichtungsbereichs, ist nicht erforderlich.

Gemäß einer weiteren Ausführungsform weist die Dichtung zumindest eine radial verlaufende Durchgangsbohrung auf, die mit der oder den Durchgangsöffnung/en des geteilten Rings ausgerichtet ist. Diese Durchgangsbohrung kann beispielsweise zylindrisch oder kegelförmig sein. Diese Durchgangsbohrung oder Durchgangsöffnung kann beispielsweise verwendet werden, um Schmiermittel aus dem Lagerinnenraum, das heißt aus dem Bereich zwischen den beiden Ringen durch den geteilten Ring und durch die Dichtung abzuführen. Auf diese Weise kann im Bereich der Dichtung ein Fettauslass realisiert werden. Die Durchgangsöffhungen können auch für andere Zwecke verwendet werden.

Ein rohrförmiges Element kann in einer Ausführungsform in der Durchgangsöffnung des geteilten Rings und der Durchgangsbohrung der Dichtung angeordnet sein. Das rohrförmige Element kann dabei entweder zylindrisch oder kegelförmig sein. Bevorzugt kann das rohrförmige Element der Form der Durchgangsöffnung in dem geteilten Ring und der Dichtung entsprechen. Durch das rohrförmige Element kann der Lagerinnenraum mit dem Außenbereich des Lagers verbunden werden. Durch das rohrförmige Element kann verbrauchtes Fett aus dem Lagerinnenraum abgeführt werden. Alternativ kann das rohrförmige Element auch verwendet werden, um Fett zuzuführen.

Das rohrförmige Element kann mit einem Schmiermittelauslasssystem koppelbar sein. Das Schmiermittelauslasssystem kann mit einem Behälter verbunden sein, in dem verbrauchtes Schmiermittel, insbesondere Schmierfett, gesammelt werden kann.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine perspektivische Ansicht eines Segments eines Lagers mit einem geteilten Innenring;
- Fig. 2:: eine schematische Schnittansicht eines geteilten Rings mit einer Dichtung;
- Fig. 3:: eine schematische Schnittansicht eines Lagers mit einem geteilten Innenring und einer Dichtung;
- Fig. 4:: eine Schnittansicht eines geteilten Innenrings mit einer Dichtung und einem Schmiermittelauslass;
- Fig. 5:: eine schematische Schnittansicht eines geteilten Rings mit einer Dichtung;
- Figuren 6-12:: schematische Schnittansichten von Ausführungsformen der Dichtung von Figuren 1 bis 5.

Im Folgenden werden gleiche oder funktionell gleichwirkende Elemente mit denselben Bezugszeichen gekennzeichnet.

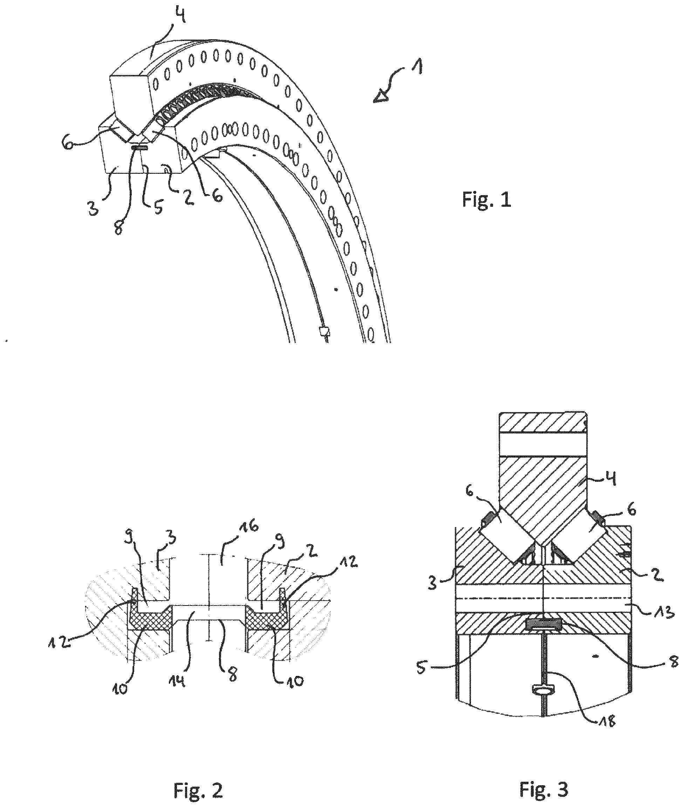

Fig. 1 zeigt eine perspektivische Ansicht eines Segments eines Lagers 1. Das Lager 1 weist einen Innenring, einen Außenring 4 sowie zwischen den Ringen angeordnete Wälzkörper 6 auf. Das gezeigte Lager 1 ist ein doppelreihiges Kegellrollenlager mit zwei Reihen von Wälzkörpern 6 und einem geteilten Innenring 2, 3.

Zwischen den beiden Teilen 2, 3 des Innenrings, d.h. im Stoßbereich, kann eine radiale Öffnung 5 vorgesehen sein. Um Schmiermittel, welches sich im Lager zwischen den Ringen 2, 3, 4 befindet, aus dem Lagerinnenraum, d.h. dem Raum, der zwischen dem geteilten Innenring 2, 3 und dem Außenring 4 definiert ist, abzuleiten, kann die radiale Öffnung 5 mit einem Schmiermittelauslass verbunden sein.

Wie in Fig. 2 gezeigt ist, wird der Stoßbereich 5 mit einer Dichtung 8, die in dem Stoßbereich 5 zwischen den beiden Teilen 2, 3 des geteilten Innenrings angeordnet ist, abgedichtet. Hierzu weisen die beiden Teile 2, 3 des geteilten Innenrings jeweilige Aussparungsteile 9 auf, die einander axial gegenüberliegen und zusammen eine sich axial erstreckende Aussparung ausbilden.

Die ringförmige Dichtung 8 ist zylindermantelförmig, wobei sich die axialen Enden 10 der Dichtung 5 in die Aussparungsteile 9 erstrecken. Die Dichtung 8 hat also die Form eines flachen Rings.

Um die Dichtwirkung zu verbessern, können an den beiden axialen Enden 10 sich im Wesentlichen radial erstreckende Dichtlippen 12 vorgesehen sein. Diese Dichtlippen 12 werden an den Innenring 2, 3 in den Aussparungsteilen 10 angedrückt und dichten somit den Lagerinnenraum besonders gut ab.

Die Dichtung 8 kann im Stoßbereich 5 des geteilten Rings, der entweder der Außenring oder der Innenring sein kann, angeordnet werden. Wie in Fig. 3 gezeigt ist, kann die Dichtung 8 in dem geteilten Innenring 2, 3 zwischen der inneren Bohrung des Innenrings und einer sich axial erstreckenden Bohrung 13 vorgesehen sein.

In diesem Fall kann ausgehend von der Dichtung 8 eine Durchgangsöffnung 18 zu der inneren Bohrung des Innenrings führen. Über diese Durchgangsöffnung 18 kann beispielsweise Schmiermittel ausgeführt werden. Um das Schmiermittel aus dem Lagerinnenraum durch die Dichtung 8 und den Innenring 2, 3 abzuleiten, weisen sowohl die Dichtung 8 als auch die beiden Teile 2, 3 des Innenrings eine Durchgangsöffnung 14, 16 auf, wie sie beispielsweise in Fig. 2 gezeigt ist. Die Durchgangsöffnung 16 des Innenrings 2, 3 und die Durchgangsbohrung 14 der Dichtung 9 sind miteinander ausgerichtet. Umlaufend können mehrere solcher Durchgangsöffnungen 14, 16 vorgesehen sein.

Die Durchgangsöffnung 16 des Innenrings 2, 3 befindet sich im Stoßbereich 5, so dass keine weiteren zusätzlichen Öffnungen vorgesehen werden müssen, die den am Innenring 2, 3 vorhandenen Raum beanspruchen würden. Die Durchgangsöffnung 16 kann als Ausfräsung der Teile 2, 3 des Innenrings ausgeführt sein.

In die Durchgangsöffnungen 14, 16 kann ein rohrförmiges Element 20 eingeführt werden, das mit einem Schmiermittelauslasssystem verbunden werden kann. Über das rohrförmige Element 20, dass sich in dem Innenring 2, 3 erstreckt, kann beispielsweise auf einfache Weise eine Verbindung des Lagerinnenraums mit der Außenumgebung des Lagers 1 hergestellt werden.

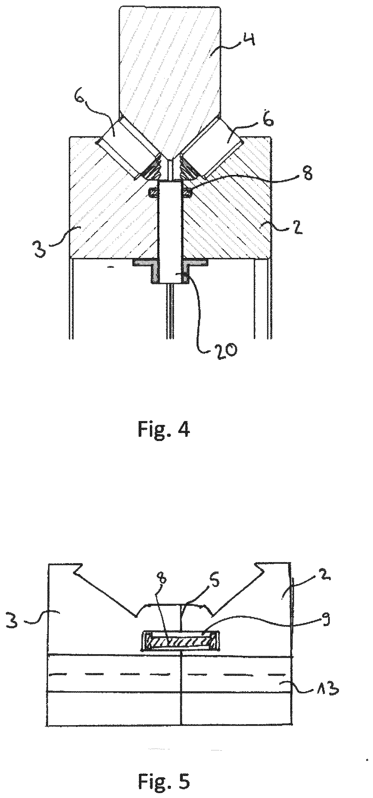

Andere Anordnungen der Dichtung 8 sind ebenfalls möglich. Beispielsweise kann die Dichtung 8 zwischen der Bohrung 13 und dem Lagerinnenraum mit den Wälzkörpern 6 angeordnet sein, wie es in Fig. 5 gezeigt ist.

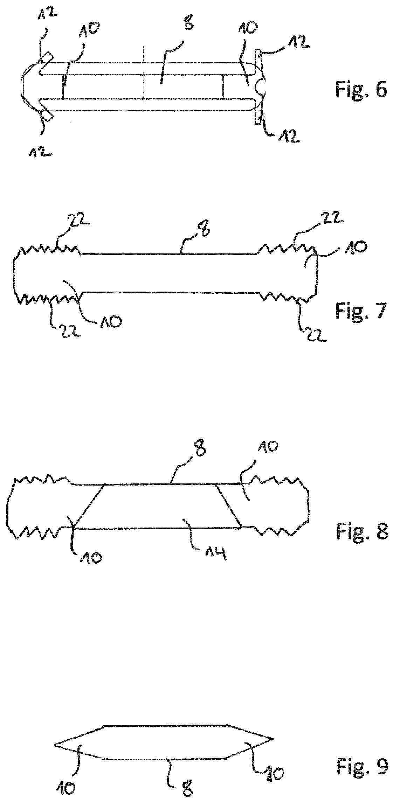

Um die Abdichtung des Lagers 1 durch die Dichtung 8 sicherzustellen, kann die Dichtung 8 die sich radial erstreckenden Dichtlippen 12 aufweisen. Diese können unterschiedliche Formen aufweisen. Beispielsweise können sich die Dichtlippen 12 schräg nach radial innen oder außen erstrecken, wie in Fig. 6 auf der linken Seite gezeigt ist. Alternativ können sich die Dichtlippen auch senkrecht nach radial innen oder außen erstrecken, wie in Fig. 6 auf der rechten Seite gezeigt ist. In jedem Fall stützen sich die Dichtlippen 12 an den Aussparungsteilen 9 der Innenringteile 2, 3 ab, um auf diese Weise die Dichtheit des Lagers 1 sicherzustellen. Des Weiteren können durch die Dichtlippen 12 Fertigungstoleranzen der Aussparungsteile 9 ausgeglichen werden.

Die Dichtung 8 kann diverse Formen aufweisen. Wie in Figuren 3 und 5 gezeigt, kann die Dichtung 8 beispielsweise hantelförmig ausgebildet sein. In den Figuren 7 bis 12 sind weitere mögliche Ausgestaltungen der Dichtung 8 gezeigt.

Beispielsweise kann die Dichtung 8 an einen oder beiden Enden eine Dichtstruktur 22 aufweisen, wie sie in Fig. 7 gezeigt ist. Diese Dichtstruktur 22 kann mehrere Auskragungen aufweisen, die beispielsweise sägezahnförmig sein können. Durch die Dichtstruktur 22 kann eine besonders gute Anpassung der Dichtung 8 an die Aussparungsteile 9 erfolgen.

Die Durchgangsbohrung 14 der Dichtung 8 kann zylindrisch oder kegelförmig, wie in Fig. 8 gezeigt, sein. Durch die Kegelförmig kann eine verbesserte Dichtwirkung erreicht werden. Des Weiteren kann das rohförmige Element 20 leichter eingeführt werden.

Die beiden Enden 10 der Dichtung 8 können identisch oder unterschiedlich zueinander ausgebildet sein. Des Weiteren können die Enden 10 auch ohne Dichtstruktur 22 oder Dichtlippen 12 ausgebildet sein.

Wie in Fig. 9 gezeigt ist, können die Enden 10 spitz ausgebildet sein. Durch die Spitze ist eine einfache Einführung in die Aussparungsteile 9 gewährleistet. Weitere Formen und Kombinationen sind ebenfalls möglich.

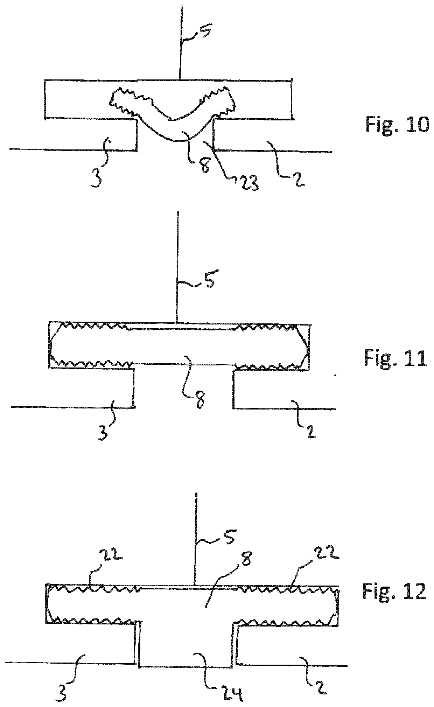

Die beiden Ringteile 2, 3 können zusätzlich zu der Aussparung 9 eine weitere Aussparung 23 aufweisen, die den Ring nach außen hin öffnet, wie in Fig. 10 gezeigt ist. Durch diese Aussparung 23 kann die Dichtung 8, die elastisch ist, auf einfache Weise eingebaut und ausgetauscht werden. Nach dem Einsetzen, das in Fig. 10 dargestellt ist, erstreckt sich die Dichtung 8 in der Aussparung 9.

Um den Ring besser abzudichten, kann die Dichtung 9 eine Verdickung 24 aufweisen, die in die Aussparung 23 auskragt. Auf diese Weise kann ein dichtender Abschluss der Ringteile 2, 3 durch die Dichtung 8 auch in der Aussparung 23 erreicht werden.

Durch das vorgeschlagene Lager und die Dichtung kann ein zweigeteilter Lagerring auf einfache Weise abgedichtet werden. Da die Dichtung nicht zwischen den Teilen des Rings, sondern in einer Aussparung in den Ringteilen, kann die Dichtwirkung im Vergleich zu bisherigen Lösungen verbessert werden. Zusätzlich kann durch die Dichtung eine Öffnung bereitgestellt werden, um auf einfache Weise Schmiermittel aus dem Lager abzuführen.

### Bezugszeichenliste

- 1: Lager
- 2: erster Teil des Innenrings
- 3: zweiter Teil des Innenrings
- 4: Außenring
- 5: Stoßbereich
- 6: Wälzkörper
- 8: Dichtung
- 9: Aussparungsteil
- 10: axiales Ende
- 12: Dichtlippen
- 13-18: Durchgangsöffnung
- 20: rohrförmiges Element
- 22: Dichtstruktur
- 23: Aussparung
- 24: Verdickung

## Patentansprüche

1. Lager (1) mit einem ersten Ring (2, 3), einem zweiten Ring (4) sowie zwischen den Ringen (2, 3, 4) angeordneten Wälzkörpern (6), wobei der erste Ring (2, 3) ein geteilter Ring mit einem ersten Ringteil (2) und einem zweiten Ringteil (3) ist, wobei eine ringförmige Dichtung (8) in einem Stoßbereich (5) zwischen dem ersten Ringteil (2) und dem zweiten Ringteil (3) angeordnet ist,
**dadurch gekennzeichnet,**
**dass** der erste Ringteil (2) und der zweite Ringteil (3) im Stoßbereich (5) eine sich axial erstreckende Aussparung (9) aufweisen, wobei die Aussparung (9) durch einen sich axial erstreckenden Aussparungsteil (9) in dem ersten Ringteil (2) und einen sich axial erstreckenden Aussparungsteil (9) in dem zweiten Ringteil (3) ausgebildet ist, und dass die ringförmige Dichtung (8) zylindermantelförmig ausgebildet ist und sich axial in den Aussparungsteil (9) des ersten Ringteils (2) und den Aussparungsteil (9) des zweiten Ringteils (3) erstreckend angeordnet ist, wobei die Aussparung (9) als Tasche in dem ersten und zweiten Ringteil (2, 3) ausgebildet ist, in der die zylindermantelförmige Dichtung (8) aufgenommen ist.

2. Lager nach Anspruch 1, wobei die Dichtung (8) in dem Stoßbereich (5) eine sich nach radial innen und/oder nach radial außen auskragende Verdickung (24) aufweist.

3. Lager nach Anspruch 1 oder 2, wobei zumindest ein Ende (10) der axialen Ausdehnung der zylindermantelförmigen Dichtung (8) mindestens eine sich nach radial innen und/oder nach radial außen erstreckende Dichtlippe (12) aufweist.

4. Lager nach Anspruch einem der vorhergehenden Ansprüche, wobei zumindest ein Ende (10) der axialen Ausdehnung der zylindermantelförmigen Dichtung (8) eine Dichtstruktur (22) mit mehreren auskragenden Elementen aufweist, die sich nach radial innen und/oder nach radial außen erstrecken.

5. Lager nach Anspruch 4, wobei die auskragenden Elemente zahnförmig oder sägezahnförmig angeordnet sind.

6. Lager nach einem der vorhergehenden Ansprüche, wobei der erste Ring (2, 3) im Stoßbereich (5) zumindest eine Durchgangsöffnung (16) aufweist.

7. Lager nach Anspruch 6, wobei die Dichtung (8) zumindest eine radial verlaufende Durchgangsbohrung (14) aufweist, die mit der Durchgangsöffnung (16) des ersten Rings (2, 3) ausgerichtet ist.

8. Lager nach Anspruch 7, wobei die Durchgangsbohrung (14, 16) in der umlaufenden Dichtung zylindrisch oder kegelförmig ist.

9. Lager nach Anspruch 8 oder 9, wobei ein rohrförmiges Element (22) in der Durchgangsöffnung (16) des ersten Rings (2, 3) und der Durchgangsbohrung (14) der Dichtung (8) anordenbar ist.

10. Lager nach Anspruch 10, wobei das rohrförmige Element (22) mit einem Schmiermittelauslasssystem koppelbar ist.

## Claims

1. Bearing (1) with a first ring (2, 3), a second ring (4), and rolling bodies (6) which are arranged between the rings (2, 3, 4), the first ring (2, 3) being a split ring with a first ring part (2) and a second ring part (3), an annular seal (8) being arranged in an abutment region (5) between the first ring part (2) and the second ring part (3), **characterized in that** the first ring part (2) and the second ring part (3) have an axially extending cut-out (9) in the abutment region (5), the cut-out (9) being configured by way of an axially extending cut-out part (9) in the first ring part (2) and an axially extending cut-out part (9) in the second ring part (3), and **in that** the annular seal (8) is of cylinder shell-shaped configuration and is arranged so as to extend axially into the cut-out part (9) of the first ring part (2) and into the cut-out part (9) of the second ring part (3), the cut-out (9) being configured as a pocket in the first and second ring part (2, 3), in which pocket the cylinder shell-shaped seal (8) is received.

2. Bearing according to Claim 1, the seal (8) having a radially inwardly and/or radially outwardly projecting thickened portion (24) in the abutment region (5).

3. Bearing according to Claim 1 or 2, at least one end (10) of the axial extent of the cylinder shell-shaped seal (8) having at least one radially inwardly and/or radially outwardly extending sealing lip (12).

4. Bearing according to Claim one of the preceding claims, at least one end (10) of the axial extent of the cylinder shell-shaped seal (8) having a sealing structure (22) with a plurality of projecting elements which extend radially inwards and/or radially outwards.

5. Bearing according to Claim 4, the projecting elements being arranged in a tooth-shaped or sawtooth-shaped manner.

6. Bearing according to one of the preceding claims, the first ring (2, 3) having at least one through opening (16) in the abutment region (5).

7. Bearing according to Claim 6, the seal (8) having at least one radially running through bore (14) which is aligned with the through opening (16) of the first ring (2, 3).

8. Bearing according to Claim 7, the through bore (14, 16) in the circumferential seal being cylindrical or conical.

9. Bearing according to Claim 8 or 9, it being possible for a tubular element (22) to be arranged in the through opening (16) of the first ring (2, 3) and the through bore (14) of the seal (8).

10. Bearing according to Claim 10, it being possible for the tubular element (22) to be coupled to a lubricant outlet system.

## Revendications

1. Palier (1), comprenant une première bague (2, 3), une deuxième bague (4), ainsi que des roulements (6) disposés entre les bagues (2, 3, 4), la première bague (2, 3) étant une bague fendue avec une première partie de bague (2) et une deuxième partie de bague (3), un joint annulaire (8) étant disposé dans une zone d'aboutement (5) entre la première partie de bague (2) et la deuxième partie de bague (3),
**caractérisé en ce que** la première partie de bague (2) et la deuxième partie de bague (3) présentent dans la zone d'aboutement (5) un évidement (9) s'étendant axialement, l'évidement (9) étant réalisé par une partie d'évidement (9) s'étendant axialement dans la première partie de bague (2) et une partie d'évidement (9) s'étendant axialement dans la deuxième partie de bague (3), et **en ce que** le joint annulaire (8) est réalisé sous forme d'enveloppe de cylindre et est disposé en s'étendant axialement dans la partie d'évidement (9) de la première partie de bague (2) et dans la partie d'évidement (9) de la deuxième partie de bague (3), l'évidement (9) étant reçu sous la forme d'une poche dans la première et la deuxième partie de bague (2, 3) dans laquelle est reçu le joint (8) en forme d'enveloppe de cylindre.

2. Palier selon la revendication 1, dans lequel le joint (8) présente dans la zone d'aboutement (5) une surépaisseur (24) faisant saillie radialement vers l'intérieur et/ou radialement vers l'extérieur.

3. Palier selon la revendication 1 ou 2, dans lequel au moins une extrémité (10) de l'étendue axiale du joint (8) en forme d'enveloppe de cylindre présente au moins une lèvre d'étanchéité (12) s'étendant radialement vers l'intérieur et/ou radialement vers l'extérieur.

4. Palier selon la revendication l'une quelconque des revendications précédentes, dans lequel au moins une extrémité (10) de l'étendue axiale du joint (8) en forme d'enveloppe de cylindre présente une structure d'étanchéité (22) avec plusieurs éléments faisant saillie qui s'étendent radialement vers l'intérieur et/ou radialement vers l'extérieur.

5. Palier selon la revendication 4, dans lequel les éléments faisant saillie sont disposés en forme de dents ou en forme de dents de scie.

6. Palier selon l'une quelconque des revendications précédentes, dans lequel la première bague (2, 3) présente au moins une ouverture de passage (16) dans la zone d'aboutement (5).

7. Palier selon la revendication 6, dans lequel le joint (8) présente au moins un perçage de passage (14) s'étendant radialement qui est orienté sur l'ouverture de passage (16) de la première bague (2, 3).

8. Palier selon la revendication 7, dans lequel le perçage de passage (14, 16) est cylindrique ou conique dans la direction périphérique.

9. Palier selon la revendication 8 ou 9, dans lequel un élément tubulaire (22) peut être disposé dans l'ouverture de passage (16) de la première bague (2, 3) et dans le perçage de passage (14) du joint (8).

10. Palier selon la revendication 10, dans lequel l'élément tubulaire (22) peut être couplé à un système de sortie de lubrifiant.
